# EUROPEAN PATENT SPECIFICATION

(11) **EP 3 489 068 B1**
(45) Date of publication and mention of the grant of the patent: **13.08.2025**
(21) Application number: 17830795.5
(22) Date of filing: 27.06.2017
(51) Int. Cl.: B60L 3/00, B60K 6/46, B60L 1/00, B60L 9/18, B60W 10/08, B60W 10/30, B60W 20/50, B61C 7/04, H02M 7/12, H02M 7/48

(54) **VEHICLE POWER CONVERSION DEVICE AND RAIL VEHICLE**
FAHRZEUGLEISTUNGSUMWANDLUNGSVORRICHTUNG UND SCHIENENFAHRZEUG
DISPOSITIF DE CONVERSION DE PUISSANCE DE VÉHICULE ET VÉHICULE FERROVIAIRE

(30) Priority: 19.07.2016 JP 2016141008
(43) Date of publication of application: 29.05.2019
(73) Proprietor: Hitachi, Ltd., Tokyo 100-8280 (JP)
(72) Inventor: MURAOKA, Kazufumi, Tokyo 100-8280 (JP); YAMAGUCHI, Satoshi, Tokyo 100-8280 (JP); KOGURE, Hiroshi, Tokyo 100-8280 (JP); MOCHIZUKI, Kento, Tokyo 100-8280 (JP); YAMAUCHI, Takahiro, Tokyo 100-8280 (JP)
(74) Representative: Mewburn Ellis LLP
(86) International application number: PCT/JP2017/023625
(87) International publication number: WO 2018/016275

(56) References cited:
- EP-A1- 2 786 890
- JP-A- 2003 274 509
- JP-A- 2003 274 509
- JP-A- 2009 254 206
- JP-A- 2009 254 206
- JP-A- 2014 140 294
- JP-A- 2015 016 815

## Description

### Technical Field

The present invention relates to a power conversion device that is mounted in a vehicle.

### Background Art

A system, as outlined below, for use in a rail vehicle has appeared recently: a generator is driven by an engine and electric power output by the generator is converted by a power conversion device to supply power to a vehicle drive unit, such as a motor, of a train and electric equipment on the vehicle, such as an air-conditioning system, a lighting system, and a battery charger. In most cases, equipment such as the engine, generator, and power conversion device is situated under the floor of the rail vehicle. Consequently, because of high temperature exhaust air of the engine, the temperature of the power conversion device increases more in comparison with an ordinary train system. Also, because a rail vehicle generally runs in both front/back directions, it is difficult that the power conversion device gets away from the influence of the engine exhaust air. In a power conversion device, in order to prevent failure and reduced life span of semiconductor elements for power conversion and a control logic unit due to temperature rise inside the device, temperature sensors are generally provided on the semiconductor elements and the control logic unit and the device has a function of stopping the power conversion device when a value of the temperature sensors has become more than a permitted value. In a system in which electric power is supplied to a power conversion device by an engine and a generator, there is a possibility that the power conversion device is heated by the engine exhaust air and the power conversion device is forced to stop frequently by this stopping function. As a solution to avoid this, a method that decreases the output of a motor that is a load of the power conversion device is described in JP 2005-269815.

EP 2 786 890 A1 and JP 2009 254206 A refer to a train in which the power to be generated to drive the train is distributed between the motors depending on the temperature of the motors and their respective electric equipment. JP 2003 274509 A discloses a way to maintain a converter and inverter in desired temperature range.

### Summary of Invention

### Technical Problem

If a control method described in JP 2005-269815 is applied to a rail vehicle, the output torque would be decreased lower than a desired motor torque and, therefore, this may result in non-fulfillment of train operation as per timetable, causing a train delay.

An object of the present invention is to provide a power conversion device that operates to decrease the output exhaust air temperature of an engine, while maintaining train operation as per timetable, and prevent an emergency stop due to the temperature of a converter or an inverter in excess of a permitted value.

### Solution to Problem

The object is addressed by a power conversion device according to claim 1 and a rail vehicle according to claim 6. Advantageous Effects of Invention

According to the present invention, it is possible to decrease the output exhaust air temperature of an engine by constraining electric power that is consumed by auxiliary equipment while maintaining train operation as per timetable, and prevent an emergency stop due to the temperature of a converter or an inverter in excess of a permitted value. Brief Description of Drawings
Fig. 1 is a system configuration diagram of a power conversion device pertaining to a first embodiment of the present invention.
Fig. 2 is a diagram illustrating a flowchart of control by an element over-temperature detection unit 91 in the first embodiment.
Fig. 3 is a system configuration diagram of a power conversion device pertaining to a second embodiment.
Fig. 4 is a diagram illustrating a flowchart of control by an intra-housing over-temperature detection unit 93 in the second embodiment.
Fig. 5 is a system configuration diagram of a power conversion device pertaining to a third embodiment.
Fig. 6 is a diagram illustrating a flowchart of control by a controller over-temperature detection unit 94 in the third embodiment.

### Description of Embodiments

As embodiments of the present invention, first through third embodiments are described with reference to the drawings. In the respective drawings and the respective embodiments, identical or similar components are assigned identical reference designators and description of duplicated components may be omitted.

### First Embodiment

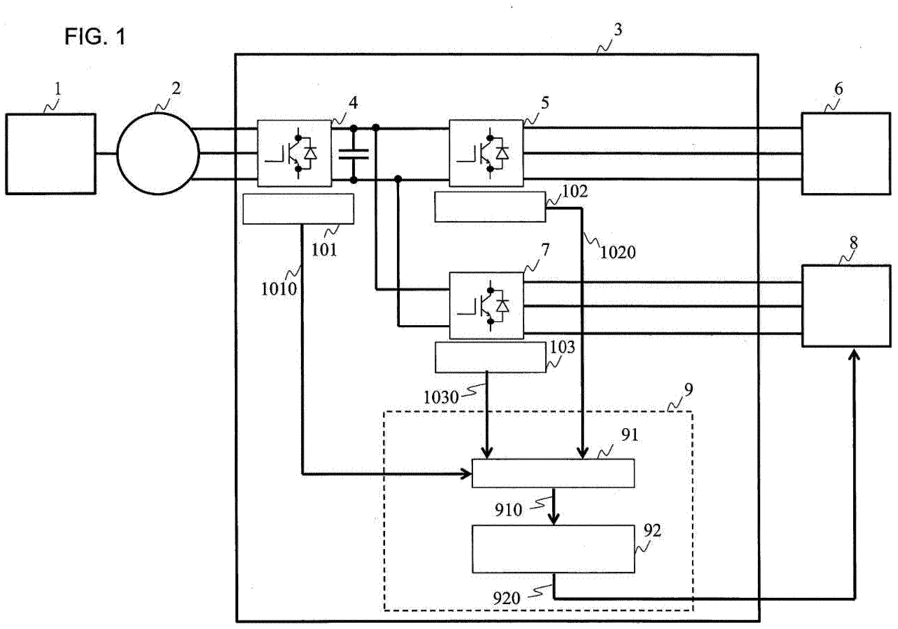

Fig. 1 is a system configuration diagram of a power conversion device pertaining to a first embodiment of the present invention. Description starts with a basic configuration of the present system. A generator 2 is connected to an engine 1 and alternating current (AC) power which is generated by this generator 2 is fed into a power conversion device 3. The power conversion device 3 converts the AC power fed into it to a direct current (DC) power through a converter 4 and, through a first inverter (an inverter for driving a motor), converts this DC power to a three-phase AC power to make an AC motor 6 generate motive force for driving a train. In addition, from the DC power produced by the foregoing converter 4, AC power is produced by a second inverter 7 (auxiliary power supply device), so that the power is supplied to auxiliary equipment 8, such as an air-conditioning system, a lighting system, and a brake compressor. The auxiliary equipment 8 has a function of decreasing load a load upon receiving a load decrease instruction from a controller 9 of the power conversion device. Furthermore, in addition to a function of creating a load decrease instruction to the auxiliary equipment 8, the controller 9 has a function of exerting an overall control of the system including control of the converter 4, first inverter 5, and second inverter 7 and a protective function that performs stopping and rebooting the system in the event that abnormality such as over-temperature has been found in the converter 4, first inverter 5, or second inverter 7. Now, in Fig. 1, detail of the function of exerting an overall control of the system including control of the converter 4, first inverter 5, and second inverter 7 and detail of the protective function that performs stopping and rebooting the system upon detection of abnormality of the converter 4, first inverter 5, or second inverter are omitted from depiction. 7.

Then, descriptions are provided as to what processing is performed in the controller 9 to create a load decrease instruction to the auxiliary equipment 8. The converter 4, first inverter 5, and second inverter 7 of the power conversion device 3 are provided with a temperature sensor which measures the temperature of a switching element and outputs a result of the measurement as element temperature information. In the controller 9, an element over-temperature detection unit 91 generates an over-temperature detection signal 910 from converter element temperature information 1010, first inverter element temperature information 1020, and second inverter element temperature information 1030 which are pieces of element temperature information from temperature sensors 101, 102, 103 which are mounted on the converter 4, first inverter 5, and second inverter 7, respectively, and outputs that signal to a load decrease instruction creating unit 92.

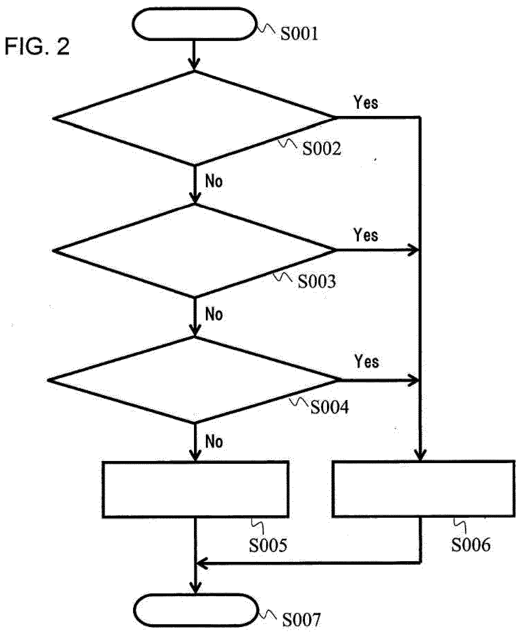

Fig. 2 is a diagram illustrating a flowchart of control by the element over-temperature detection unit 91 in Fig. 1. This control flowchart illustrates a basic control flow for creating an over-temperature detection signal 910 from the converter element temperature information 1010, first inverter element temperature information 1020, and second inverter element temperature information 1030 from the temperature sensors 101, 102, 103 in the power conversion device 3.

At step S001, the element over-temperature detection unit 91 (hereinafter abbreviated to the "detection unit") starts processing. At step S002, the detection unit determines whether or not the element temperature of the first inverter is equal to or more than a predetermined temperature. If the element temperature of the first inverter is equal to or more than the predetermined temperature (Yes), the detection unit determines over-temperature and sets the over-temperature detection signal 910 ON at step S006, and terminates the processing at step S007. Otherwise, if the element temperature of the first inverter is less than the predetermined temperature at step S002, a transition is made to step S003.

At step S003, the detection unit determines whether or not the element temperature from the second inverter is equal to or more than a predetermined temperature. If the element temperature of the second inverter is equal to or more than the predetermined temperature (Yes), the detection unit determines over-temperature and sets the over-temperature detection signal 910 ON at step S006, and terminates the processing at step S007. Otherwise, if the element temperature of the second inverter is less than the predetermined temperature at step S003, a transition is made to step S004.

At step S004, the detection unit determines whether or not the element temperature from the converter is equal to or more than a predetermined temperature. If the element temperature of the converter is equal to or more than the predetermined temperature (Yes), the detection unit determines over-temperature and sets the over-temperature detection signal 910 ON at step S006, and terminates the processing at step S007. Otherwise, if the element temperature of the converter is less than the predetermined temperature at step S004, the detection unit determines no over-temperature and sets the over-temperature detection signal 910 OFF at step S005, and terminates the processing at step S007.

Here, the predetermined temperature should be set lower than the permitted temperature of each element. In particular, the predetermined temperature should be set to a temperature that is on the order of 60°C to 30°C lower than the permitted temperature. This is because the element temperature that can be measured by a temperature sensor is the temperature of the package of the element and the temperature of the junction of the element is higher than the temperature of the package. Additionally, if the predetermined temperature is set lower than, but close to the permitted value, protection may be actuated to force the power conversion device to stop before an effect of reducing the load and restraining temperature rise works. In addition, if an element that is used differs, the predetermined temperature may differ for the first inverter, second inverter, and converter. Furthermore, processing order of the steps S002, S003, and S004 is not necessarily in the order described in Fig. 2 and the processing order can be changed.

In addition, a part or the whole of the element over-temperature detection unit 91 mentioned above may be implemented by hardware; inter alia, by designing an integrated circuit that is used as a component of the controller 9 to implement it. In addition, it may be implemented by software in such a way that a processor (not depicted) included in the controller 9 interprets and executes a program that implements respective functions. Information such as this program can be stored in a recording device such as a memory, hard disk, and SSD or a recording medium such as an IC card, SD card, and DVD.

Returning to Fig. 1, descriptions are provided as to what processing is performed after the over-temperature detection signal 910 is set ON. The load decrease instruction creating unit 92 creates a load decrease instruction 920, based on the over-temperature detection signal 910.

This load decrease instruction 920 differs according to the type of the auxiliary equipment 8. For example, if the auxiliary equipment 8 is an air-conditioning system, an instruction for decreasing the number of air-conditioners to be run is created. If the auxiliary equipment 8 is a lighting system, an instruction for decreasing the number of lighting units to be turned on is created. As a method of inputting this instruction to the auxiliary equipment 8, the instruction may be transmitted with a metallic line or using a control information processing device which is not depicted.

As described hereinbefore, in the controller 9 in the first embodiment, the element over-temperature detection unit 91 determines whether or not each element is placed in an over-temperature state in excess of a predetermined temperature (on the order of 60°C to 30°C lower than the permitted temperature of the element), based on temperature information from the respective temperature sensors which measure the element temperatures of the first inverter, second inverter, and converter, and the load decrease instruction creating unit 92 outputs a load decrease instruction 920 to the auxiliary equipment 8.

Now, while the embodiment in which a load decrease instruction 920 is output to the auxiliary equipment 8 to decrease the number of units of the auxiliary equipment was described with regard to Fig. 1, it is also possible to output a load decrease instruction 920 to the second inverter and control the switching operation of the second inverter to decrease the amount of electric power to be supplied to the auxiliary equipment.

In a rail vehicle system in which a generator is driven by an engine installed under the floor and electric power output by the generator is converted by a power conversion device also installed under the floor to supply power to a vehicle drive unit, such as a motor, of a train and electric equipment on the vehicle, such as an air-conditioning system, a lighting system, and a battery charger, it may happen that the power conversion device is heated by high temperature exhaust air from the engine and forced to stop by an over-temperature protection. To avoid falling into this situation, by decreasing the electric power output by the second inverter before the over-temperature protection works, it is possible to decrease the engine output and decrease the temperature of the engine exhaust air accordingly. This enables it to restrain rise of the temperature of the power conversion device and reduce the possibility that the power conversion device is forced to stop by the over-temperature protection. Second Embodiment

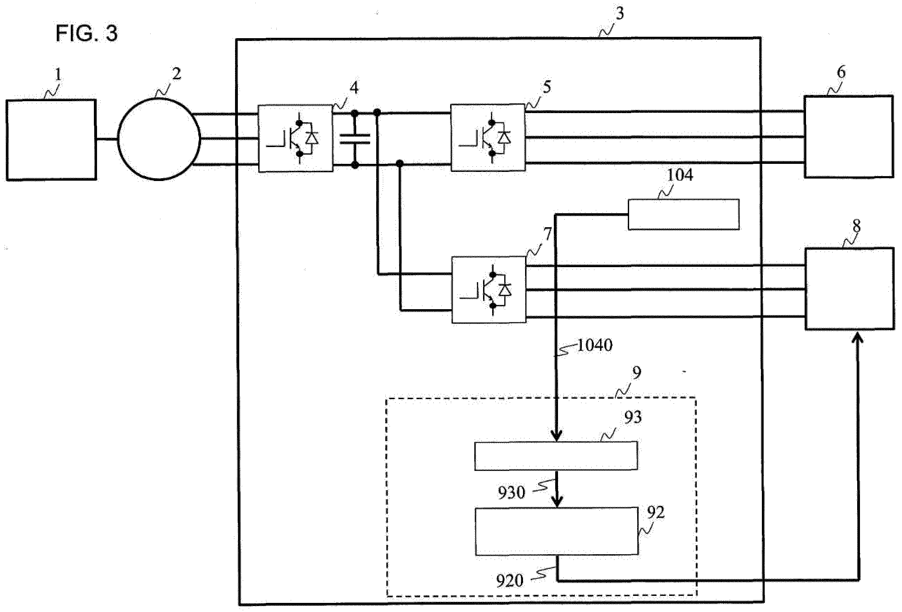

Fig. 3 is a system configuration diagram of a power conversion device pertaining to a second embodiment of the present invention. The second embodiment is such that the temperature of the power conversion device has changed from the temperature of each element, as in the first embodiment described previously, to the temperature inside the device housing. In the second embodiment, accordingly, a temperature sensor 104 is installed inside the housing of the power conversion device 3 and an intra-housing over-temperature detection unit 93 is provided in the controller 9, which differs from the first embodiment.

The following sets forth what processing is performed in the controller 9 to create a load decrease instruction 920 to the auxiliary equipment 8 in the second embodiment. In the controller 9, the intra-housing over-temperature detection unit 93 generates an over-temperature detection signal 930 from intra-housing temperature information 1040 from the temperature sensor 104 installed inside the housing of the power conversion device 3 and outputs that signal to the load decrease instruction creating unit 92.

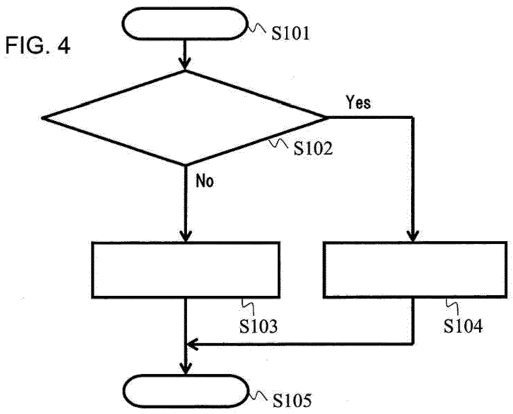

Fig. 4 is a diagram illustrating a flowchart of control by the intra-housing over-temperature detection unit 93 in Fig. 3. This control flowchart illustrates a basic control flow for creating an over-temperature detection signal 930 from the intra-housing temperature information 1040 from the temperature sensor 104 in the power conversion device 3.

At step S101, the intra-housing over-temperature detection unit 93 (hereinafter abbreviated to the "detection unit") starts processing. At step S102, the detection unit determines whether or not the intra-housing temperature is equal to or more than a predetermined temperature. If the intra-housing temperature is equal to or more than the predetermined temperature (Yes), the detection unit determines an over-temperature and sets the over-temperature detection signal 930 ON at step S104, and terminates the processing at step S105. Otherwise, if the intra-housing temperature is less than the predetermined temperature (No) at step S102, the detection unit determines no over-temperature and sets the over-temperature detection signal 930 OFF at step S103, and terminates the processing at step S105.

Here, the predetermined temperature should be set lower than the permitted temperature of each of the power conversion device components installed inside the housing. In particular, the predetermined temperature should be set to a temperature that is on the order of 20°C to 10°C lower than the permitted temperature of each component. This is for the sake of avoiding the following situation: if the predetermined temperature is set lower than, but close to the permitted value, protection may be actuated to force the power conversion device to stop before the effect of reducing the load and restraining temperature rise works.

What processing is performed by the load decrease instruction creating unit 92 when the over-temperature detection signal 930 has been set ON is the same as for the first embodiment and, therefore, a description on it is omitted.

As described hereinbefore, in the controller 9 in the second embodiment, the intra-housing over-temperature detection unit 93 determines whether or not the power conversion device is placed in an over-temperature state in excess of a predetermined temperature (on the order of 20°C to 10°C lower than the permitted temperature of each of the power conversion device components installed inside the housing), based on temperature information from the temperature sensor which measures the temperature inside the housing of the power conversion device, and the load decrease instruction creating unit 92 outputs a load decrease instruction 920 to the auxiliary equipment 8 or the second inverter.

According to the foregoing system, in a rail vehicle system in which a generator is driven by an engine and electric power output by the generator is converted by a power conversion device to supply power to a vehicle drive unit, such as a motor, of a train and electric equipment on the vehicle, such as an air-conditioning system, a lighting system, and a battery charger, it is possible to reduce the possibility that the power conversion device is heated by high temperature exhaust air from the engine and forced to stop by over-temperature protection.

### Third Embodiment

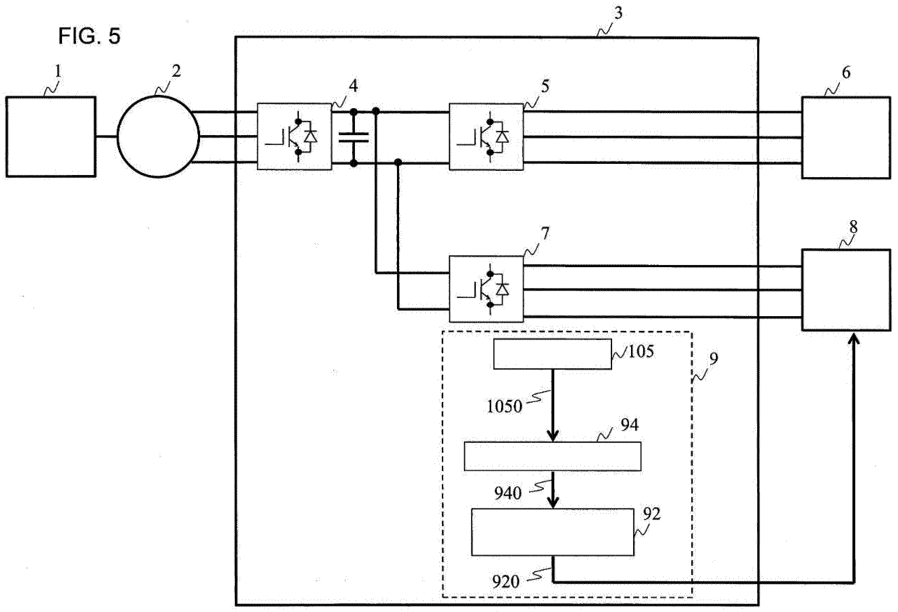

Fig. 5 is a system configuration diagram of a power conversion device pertaining to a third embodiment of the present invention. The third embodiment is such that the temperature of the power conversion device has changed from the temperature of each element, as in the first embodiment described previously, to the temperature of the controller. In the third embodiment, accordingly, a temperature sensor 105 is installed in the controller 9 of the power conversion device 3 and a controller over-temperature detection unit 94 is provided in the controller 9, which differs from the first embodiment.

The following sets forth what processing is performed in the controller 9 to create a load decrease instruction 920 to the auxiliary equipment 8 in the third embodiment. In the controller 9, the controller over-temperature detection unit 94 generates an over-temperature detection signal 940 from controller temperature information 1050 from the temperature sensor 105 installed in the controller 9 and outputs that signal to the load decrease instruction creating unit 92.

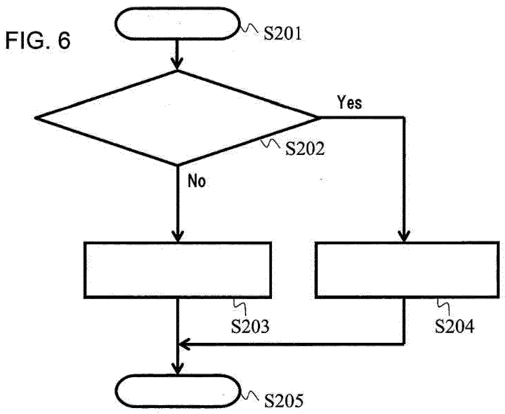

Fig. 6 is a diagram illustrating a flowchart of control by the controller over-temperature detection unit 94 in Fig. 5. This control flowchart illustrates a basic control flow for creating an over-temperature detection signal 940 from the controller temperature information 1050 from the temperature sensor 105 in the power conversion device 3.

At step S201, the controller over-temperature detection unit 943 (hereinafter abbreviated to the "detection unit") starts processing. At step S202, the detection unit determines whether or not the controller temperature is equal to or more than a predetermined temperature. If the controller temperature is equal to or more than the predetermined temperature (Yes), the detection unit determines over-temperature and sets the over-temperature detection signal 940 ON at step S204, and terminates the processing at step S205. Otherwise, if the controller temperature is less than the predetermined temperature (No) at step S202, the detection unit determines no over-temperature and sets the over-temperature detection signal 940 OFF at step S203, and terminates the processing at step S205.

Here, the predetermined temperature should be set lower than the permitted temperature of each of the components of the controller 9. In particular, the predetermined temperature should be set to a temperature that is on the order of 20°C to 10°C lower than the permitted temperature of each component. If the predetermined temperature is set lower than, but close to the permitted value, protection may be actuated to force the power conversion device to stop before the effect of reducing the load and restraining temperature rise works.

Although returning to Fig. 5, what processing is performed after the over-temperature detection signal 940 is set ON is the same as for the first embodiment and, therefore, a description on it is omitted.

As described hereinbefore, in the controller 9 in the third embodiment, the controller over-temperature detection unit 94 determines whether or not the controller is placed in an over-temperature state in excess of a predetermined temperature (on the order of 20°C to 10°C lower than the permitted temperature of each of the controller components), based on temperature information from the temperature sensor which measures the temperature of the controller, and the load decrease instruction creating unit 92 outputs a load decrease instruction 920 to the auxiliary equipment 8 or the second inverter.

According to the foregoing system, in a rail vehicle system in which a generator is driven by an engine and electric power output by the generator is converted by a power conversion device to supply power to a vehicle drive unit, such as a motor, of a train and electric equipment on the vehicle, such as an air-conditioning system, a lighting system, and a battery charger, it is possible to reduce the possibility that the power conversion device is heated by high temperature exhaust air from the engine and forced to stop by over-temperature protection.

While the first through third embodiments of the present invention have been described hereinbefore, the configuration of each of these embodiments is definitely exemplary and the present invention may be changed, as appropriate, without departing from the scope of its technical concept as defined in the -appended- claims. For example, while the first inverter 5, second inverter 7, and converter 4 are controlled by a single controller 9, as described in the first through third embodiments, each of them may be controlled by each respective controller. In this case, each controller implements detecting over-temperature and a load decrease instruction 920 to the auxiliary equipment 8. In addition, while the first inverter 5, second inverter 7, and converter 4 are installed in one housing, as described, the first inverter 5 and second inverter 7 may, for example, be installed in a separate housing. In this case, again, each controller implements detecting over-temperature and a load decrease instruction 920 to the auxiliary equipment 8.

### List of Reference Signs

1: Engine, 2: Generator, 3: Power conversion device, 4: Converter, 5: First inverter, 6: AC motor, 7: Second inverter, 8: Auxiliary equipment, 9: Controller, 91: Element over-temperature detection unit, 92: Load decrease instruction creating unit, 93: Intra-housing over-temperature detection unit, 94: Controller over-temperature detection unit, 101, 102, 103, 104, 105: Temperature sensor, 910, 930, 940: Over-temperature detection signal, 920: Load decrease instruction, 1010: Converter element temperature information, 1020: First inverter element temperature information, 1030: Second inverter element temperature information, 1040: Intra-housing temperature information, 1050: Controller temperature information

## Claims

1. A vehicle power conversion device mounted together with an engine (1) under a floor of a railway vehicle, the vehicle power conversion device (3) comprising:
a converter (4) which converts alternating current (AC) power generated by a generator (2) which generates electric power by torque of the engine (1) to a direct current (DC) power,
a first inverter (5) which converts the DC power to AC power to be supplied to a motor (6) for driving the vehicle,
a second inverter (7) which converts the DC power to AC power to be supplied to auxiliary equipment (8),
a first temperature sensor (102) which measures a temperature of the first inverter (5), and
a controller (9) which constrains electric power to be output by the second inverter (7);
wherein the controller (9) constrains electric power to be output by the second inverter (7) and reduces output of the engine (1) when the temperature of the first inverter (5) measured by the first temperature sensor (102) has become equal to or more than a predetermined temperature.

2. The vehicle power conversion device according to claim 1, further comprising a second temperature sensor (103) which measures a temperature of the second inverter (7) and a third temperature sensor (101) which measures a temperature of the converter (4),
wherein the controller (9) constrains electric power to be output by the second inverter (7) when the temperature measured by the second or third temperature sensor (103, 101) has become equal to or more than a predetermined temperature.

3. The vehicle power conversion device according to claim 1,
wherein the temperature of the first inverter (5) that is measured by the first temperature sensor (102) is a temperature inside a housing of the first inverter (5).

4. The vehicle power conversion device according to claim 1,
wherein the temperature of the first inverter (5) that is measured by the first temperature sensor (102) is a temperature of the controller (9).

5. The vehicle power conversion device according to any one of claims 1 to 4,
wherein, in order to constrain electric power to be output by the second inverter (7), the controller (9) decreases the number of operating units of the auxiliary equipment (8) or controls a switching operation of the second inverter (7).

6. A rail vehicle comprising a vehicle power conversion device (3) according to any one of claims 1 to 5, wherein:
the engine (1) is mounted under the floor; and
the generator (2), the motor (6) for driving the vehicle, and the auxiliary equipment (8) are further mounted.

## Patentansprüche

1. Fahrzeugleistungsumwandlungsvorrichtung, die zusammen mit einem Motor (1) unter einem Boden eines Schienenfahrzeugs befestigt ist, wobei die Fahrzeugleistungsumwandlungsvorrichtung (3) Folgendes umfasst:
einen Umrichter (4), der Wechselstrom (AC), der durch einen Generator (2) erzeugt wird, der elektrische Leistung durch das Drehmoment des Motors (1) erzeugt, in Gleichstrom (DC) umwandelt,
einen ersten Wechselrichter (5), der die Gleichstromleistung in Wechselstromleistung umwandelt, mit der ein Motor (6) zum Antreiben des Fahrzeugs zu versorgen ist,
einen zweiten Wechselrichter (7), der die Gleichstromleistung in Wechselstromleistung umwandelt, mit der Hilfseinrichtungen (8) zu versorgen sind,
einen ersten Temperatursensor (102), der eine Temperatur des ersten Wechselrichters (5) misst, und
eine Steuerung (9), die elektrische Leistung, die durch den zweiten Wechselrichter (7) auszugeben ist, beschränkt;
wobei die Steuerung (9) elektrische Leistung, die durch den zweiten Wechselrichter (7) auszugeben ist, beschränkt und die Ausgangsleistung des Motors (1) reduziert, wenn die Temperatur des ersten Wechselrichters (5), die durch den ersten Temperatursensor (102) gemessen wird, größer oder gleich einer vorbestimmten Temperatur geworden ist.

2. Fahrzeugleistungsumwandlungsvorrichtung nach Anspruch 1, die ferner einen zweiten Temperatursensor (103), der eine Temperatur des zweiten Wechselrichters (7) misst, und einen dritten Temperatursensor (101) umfasst, der eine Temperatur des Umrichters (4) misst,
wobei die Steuerung (9) elektrische Leistung, die durch den zweiten Wechselrichter (7) auszugeben ist, beschränkt, wenn die Temperatur, die durch den zweiten oder den dritten Temperatursensor (103, 101) gemessen wird, größer oder gleich einer vorbestimmten Temperatur geworden ist.

3. Fahrzeugleistungsumwandlungsvorrichtung nach Anspruch 1, wobei die Temperatur des ersten Wechselrichters (5), die durch den ersten Temperatursensor (102) gemessen wird, eine Temperatur im Inneren eines Gehäuses des ersten Wechselrichters (5) ist.

4. Fahrzeugleistungsumwandlungsvorrichtung nach Anspruch 1, wobei die Temperatur des ersten Wechselrichters (5), die durch den ersten Temperatursensor (102) gemessen wird, eine Temperatur der Steuerung (9) ist.

5. Fahrzeugleistungsumwandlungsvorrichtung nach einem der Ansprüche 1 bis 4,
wobei die Steuerung (9) die Anzahl von Betriebseinheiten der Hilfseinrichtungen (8) reduziert oder einen Schaltvorgang des zweiten Wechselrichters (7) steuert, um elektrische Leistung, die durch den zweiten Wechselrichter (7) auszugeben ist, zu beschränken.

6. Schienenfahrzeug, umfassend eine Fahrzeugleistungsumwandlungsvorrichtung (3) nach einem der Ansprüche 1 bis 5, wobei:
der Motor (1) unter dem Boden befestigt ist; und
der Generator (2), der Motor (6) zum Antreiben des Fahrzeugs, und die Hilfseinrichtungen (8) ferner befestigt sind.

## Revendications

1. Dispositif de conversion d'alimentation de véhicule monté conjointement avec un moteur (1) sous un plancher d'un véhicule ferroviaire, le dispositif de conversion d'alimentation de véhicule (3) comprenant :
un convertisseur (4) qui convertit une alimentation en courant alternatif (CA) générée par un générateur (2) qui génère une alimentation électrique par l'intermédiaire du couple du moteur (1) en une alimentation en courant continu (CC),
un premier onduleur (5) qui convertit l'alimentation CC en alimentation CA à fournir à un moteur (6) pour entraîner le véhicule,
un second onduleur (7) qui convertit l'alimentation CC en alimentation CA à fournir à un équipement auxiliaire (8),
un premier capteur de température (102) qui mesure une température du premier onduleur (5), et
un dispositif de commande (9) qui contraint l'alimentation électrique à être délivrée en sortie par le second onduleur (7) ;
dans lequel le dispositif de commande (9) contraint l'alimentation électrique à être délivrée en sortie par le second onduleur (7) et réduit la sortie du moteur (1) lorsque la température du premier onduleur (5) mesurée par le premier capteur de température (102) est devenue égale ou supérieure à une température prédéterminée.

2. Dispositif de conversion d'alimentation de véhicule selon la revendication 1, comprenant en outre un deuxième capteur de température (103) qui mesure une température du deuxième onduleur (7) et un troisième capteur de température (101) qui mesure une température du convertisseur (4),
dans lequel le dispositif de commande (9) contraint l'alimentation électrique à être délivrée en sortie par le second onduleur (7) lorsque la température mesurée par le deuxième ou le troisième capteur de température (103, 101) est devenue égale ou supérieure à une température prédéterminée.

3. Dispositif de conversion d'alimentation de véhicule selon la revendication 1,
dans lequel la température du premier onduleur (5) qui est mesurée par le premier capteur de température (102) est une température à l'intérieur d'un boîtier du premier onduleur (5).

4. Dispositif de conversion d'alimentation de véhicule selon la revendication 1,
dans lequel la température du premier onduleur (5) qui est mesurée par le premier capteur de température (102) est une température du dispositif de commande (9).

5. Dispositif de conversion d'alimentation de véhicule selon l'une quelconque des revendications 1 à 4,
dans lequel, afin de contraindre l'alimentation électrique à être délivrée en sortie par le second onduleur (7), le dispositif de commande (9) diminue le nombre d'unités de fonctionnement de l'équipement auxiliaire (8) ou commande une opération de commutation du second onduleur (7).

6. Véhicule ferroviaire comprenant un dispositif de conversion d'alimentation de véhicule (3) selon l'une quelconque des revendications 1 à 5.
dans lequel :
le moteur (1) est monté sous le plancher ; et
le générateur (2), le moteur (6) pour entraîner le véhicule et l'équipement auxiliaire (8) sont en outre montés.
